# EUROPEAN PATENT APPLICATION

(11) **EP 0 726 049 A1**
(43) Date of publication of application: **14.08.1996**
(21) Application number: 96300543.4
(22) Date of filing: 26.01.1996
(51) Int. Cl.: A47J 27/08

(54) **Pressure vessels**

(30) Priority: 27.01.1995 GB 9501636
(71) Applicant: PRESTIGE GROUP UK PLC, Burnley, Lancashire BB11 2AB (GB)
(72) Inventor: Wilkinson, Amanda, Warwick, Warwickshire (GB); Whitlock, Peter, Kenilworth, Warwickshire (GB); Daly, John, Bishops Tachbrook, Warwickshire (GB)
(74) Representative: Marles, Alan David

(57) **Abstract**

There is provided a pressure cooker having a lid 11 and a base 10, which both have at least seven pairs of cooperating segments 15, 18 for ensuring interconnection between them. The segments may or may not be equiangularly spaced around the lid or base.

## Description

This invention relates to pressure vessels and more particularly to pressure cookers.

According to a first aspect of the present invention there is provided a pressure cooker comprising a base having an upwardly extending side wall and a lid, there being provided an interlock arrangement between the base and the lid the interlock arrangement comprising a first series of seven or more spaced segments projecting from an annular flange and a corresponding second series of cooperating spaced segments projecting from an annular wall, the first series of segments and the second series of segments being provided one on the base and the other on the lid whereby the lid and base are joined by bringing them together with the second segments passing between the first segments and rotating the lid and base relative to each other so that the first and second segments become generally aligned one above the other.

Conveniently, the annular flange is located at the uppermost edge of the side wall of the base and the first segments extend outwardly. A preferred feature is that the flange and first segments are generally planar.

In preferred arrangements the lid incorporates the annular wall which extends generally downwardly and the second segments are bent inwards from the annular wall and have camming surfaces at their peripheral ends.

With some preferred embodiments the first and/or second segments have their centre lines at equiangular spacings around the annular flange and/or wall respectively, the angular extent of at least one first and/or second segment being different from the angular extent of at least one of the other first and/or second segments respectively. This can be utilised to ensure that the lid and base can be attached only in one relative position or a number of chosen relative positions.

In another arrangement the segments and spaces between the segments are equiangular and spaced equidistantly around the peripheries of the base and the cover.

In certain arrangements, eight first segments and eight second segments are provided and the base is provided with a pair of oppositely disposed handles.

At least some of the parts of the annular wall between said second segments have downward extensions. Preferably each extension does not extend the full length of its part of the peripheral wall and also each extension at its circumferential ends is chamfered so that the extension narrows in the direction of its free end. Ideally an extension is provided on all of said parts of the peripheral wall between the segments.

According to a second aspect of the present invention there is provided a lid for a pressure cooker having a base with a peripheral side wall and a peripheral out turned flange with a series of outwardly projecting segments spaced around its periphery, which lid has a generally downwardly extending peripheral wall having a series of inwardly extending segments, at least some of the parts of the peripheral wall between the segments being formed with downward extensions. The downward extensions assist in the correct alignment and seating of the lid on the base prior to the rotation action to secure the lid to the base.

According to a third aspect of the present invention there is provided a pressure cooker comprising a base having a peripheral side wall and a peripheral outturned flange with a series of outwardly projecting segments spaced around its periphery and a lid having a generally downwardly extending peripheral wall having a series of inwardly extending segments, at least some ofthe parts of the peripheral wall between the segments being formed with downward extensions.

Preferably each extension does not extend the full length of its part of the peripheral wall and also each extension at its circumferential ends is chamfered so that the extension narrows in the direction of its free end. Ideally an extension is provided on all of said parts of the peripheral wall between the segments.

In one embodiment the lid is formed from a blank of metal which is substantially circular except for said extensions projecting outwards, said blank being pressed to form the peripheral wall and the inwardly extending segments being pressed inwards.

Embodiments of the invention will now be described in more detail. The description makes reference to the accompanying diagrammatic drawings in which:

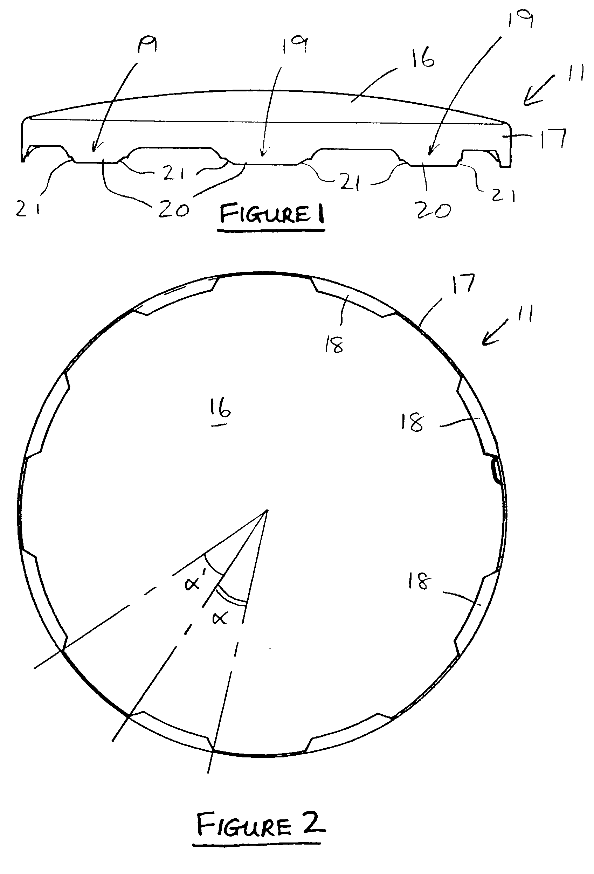

Figure 1 is a simplified side view of a lid for a pressure cooker according to the present invention.
Figure 2 is an underside view of the lid shown in figure 1,
Figure 3 is a plan view of a pressure cooker base for use with the lid of figure 1,
Figure 4 is a section on line IV - IV through the base of figure 3, and
Figure 5 is a plan view of an alternative pressure cooker base for use with a modified lid.

In the drawings there is shown a pressure cooker base 10 and a lid 11. The base 10 has a bottom wall 12 and an upstanding, peripheral side wall 13. The side wall 13 is turned outwardly at its uppermost edge to form a peripheral flange 14. At equiangular, spaced locations around the flange are provided eight outwardly projecting segments 15, the angular extent θ of the segments 15 being the same as the angular extent θ of the spaces between the segments. The eight segments 15 generally all lie in a single plane.

The lid 10 has a cover portion 16 and a peripheral, downwardly extending wall 17. At eight equiangular locations around the wall 17 eight segments 18 have been pressed inwardly. The angular extent α of these segments is the same as the angular extent α' of the undeformed portions 19 of the peripheral wall 17 and is the same as the angles θ and θ' of the base 10.

The undeformed portions 19 of the peripheral wall 17 each have a downward extension 20. Each extension 20 is of slightly shorter angular extent than its associated portion 19 and has angled edges 21 at its peripheral ends such that it tapers inwardly in the downwards direction.

The pressure cooker would normally have handle portions attached to the base 10 and lid 11 but these have been omitted from the drawings for the sake of simplicity. Also an annular sealing element would be retained between the segments 18 of the lid 11 and the cover portion 16.

To attach the lid 11 to the base 10, the lid 11 is offered to the base 10 such that the segments 18 of the lid 11 pass between the segments 15 of the base 10. The lid 11 is then rotated about the vertical central axis of the cooker so that the segments 18 are forced below the segments 15 of the base. This forcing is facilitated by the camming action of the deformed peripheral ends of the segments 18. This action causes the seal to compress and form a seal between the base 10 and the lid 11.

As stated, the pressure cookers generally have handle portion on the lid and the base which handle portions are misaligned when the lid is offered up to the base. The user then grasps the two handle portions in one hand and squeezes the two handle portions together so as to form the seal. There may even be a locking mechanism to lock the handles together in the sealing position. The angular extent α, θ of the segments is approximately 22.5° which coupled to the general size of domestic pressure cookers enables the lid 11 to be applied easily even by people with small hands. This is because of the smaller relative rotation between the lid and the base which is required. Seven segments could also be used and also nine or more depending on the cooker size.

The lid 10 may be pressed from a generally circular blank of metal which is preformed with the extensions 20. The blank is pressed so that the peripheral wall 17 is formed and is then pressed again so as to form the segments 18, the segments 18 being formed of course in those areas of the wall 17 at which there is no extension 20.

It has also been found that the provision of more interlocking segments increases the strength of the cooker. The advantage of the extra strength is that the cooker is either inherently safer for a given thickness of metal used or is cheaper to produce because a thinner metal could be used without compromising the original safety levels.

The extensions 20 and their angled edges 21 assist in the correct alignment and location of the lid 11 and the base 10. The extensions 20 are particularly useful for interlock arrangements in which the segments extend outwards in a single plane. It is quite common with known pressure cookers for the user to experience difficulty in the application of the lid on the base. If this task is not completed properly then the cooker can potentially be dangerous where there are no other failsafe systems in place.

The extensions 20 can of course be used on pressure cooker interlock arrangements comprising any number of interlocking segments and even series of segments of dissimilar angular extents and shapes. It is also possible for the extensions 20 themselves to be of different shape to those illustrated.

Irregular arrangements of segments can enable the cooker lid to be attached in a unique position, or a series of fixed positions, relative to the base. This may be important when mating handle portions are provided on the lid and the base. In one envisaged arrangement the segments 15 have their centre lines at equiangular spacings around the peripheries but one or more of the segments 15 are of a different angular extent compared to at least one of the other segments.

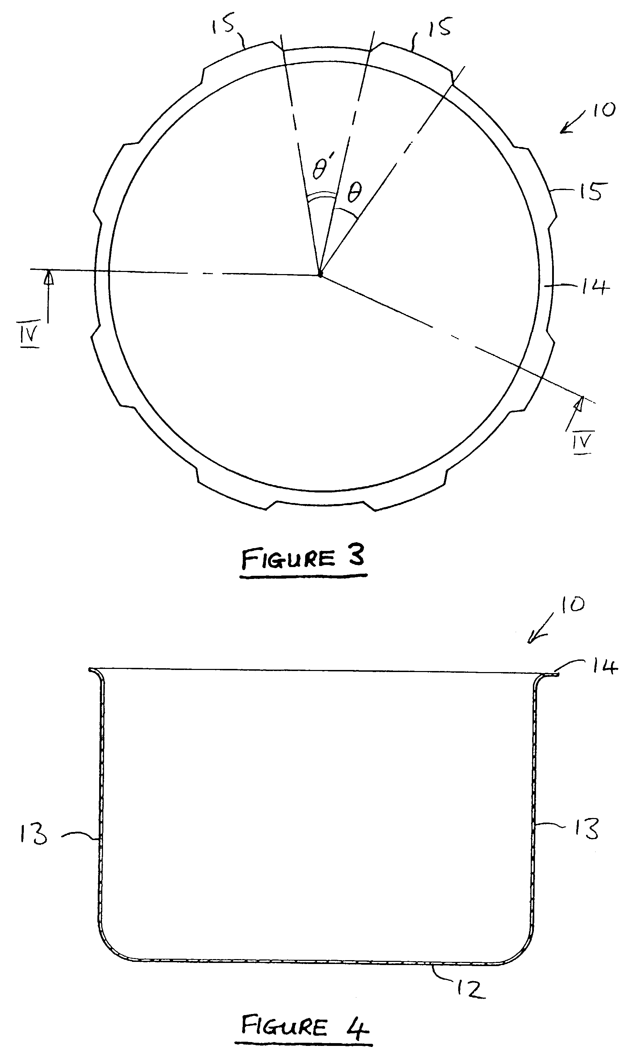

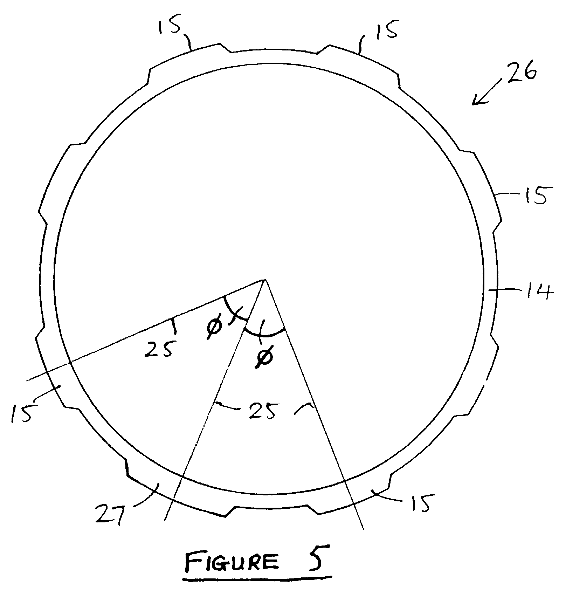

For example in figure 5, similar reference numerals have been given to features similar to those in figure 3. The centre lines 25 of some of the segments 15 are shown. The angle ⌀ between these centre lines 25 are equal for all the segments of lid 26, i.e. 45°. However, one of the segments, namely 27 has a larger annular extent on both sides of the centre line 25. Corresponding changes have to be made to the segments 18 of the lid with two adjacent segments being made smaller by enlarging the gap between the two adjacent segments. This will result in the centre lines of the segments 18 not being equiangularly spaced.

With these component parts, the lid base can be coupled in only one position relative to each other, which is ideal if cooperating single handle positions are provided on the base and the lid.

An opposite pair of larger segments could be used if oppositely disposed cooperating handle portions are provided on both the lid and the base. Corresponding changes would be needed to the segments of the lid.

## Claims

1. A pressure cooker comprising a base having an upwardly extending side wall and a lid, there being provided an interlock arrangement between the base and the lid the interlock arrangement comprising a first series of seven or more spaced segments projecting from an annular flange and a corresponding second series of cooperating spaced segments projecting from an annular wall, the first series of segments and the second series of segments being provided one on the base and the other on the lid whereby the lid and base are joined by bringing them together with the second segments passing between the first segments and rotating the lid and base relative to each other so that the first and second segments become generally aligned one above the other.

2. A pressure cooker as claimed in claim 1 wherein the annular flange is located at the uppermost edge of the side wall of the base and the first segments extend outwardly.

3. A pressure cooker as claimed in claim 2 wherein the flange and first segments are generally planar.

4. A pressure cooker as claimed in claim 3 wherein the lid incorporates the annular wall which extends generally downwardly and the second segments are bent inwards from the annular wall and have camming surfaces at their peripheral ends.

5. A pressure cooker as claimed in any one of claims 1 to 4 wherein the first and/or second segments have their centre lines at equiangular spacings around the annular flange and/or wall respectively, the angular extent of at least one first and/or second segment being different from the angular extent of at least one of the other first and/or second segments respectively.

6. A pressure cooker as claimed in any one of claims 1 to 4 wherein the segments and spaces between the segments are equiangular and spaced equidistantly around the peripheries of the base and the cover.

7. A pressure cooker as claimed in any one of claims 1 to 6 wherein eight first segments and eight second segments are provided and the base is provided with a pair of oppositely disposed handles.

8. A pressure cooker as claimed in any one of claims 1 to 7 wherein At least some of the parts of the annular wall between said second segments have downward extensions.

9. A pressure cooker as claimed in claim 8 wherein each extension does not extend the full length of its part of the peripheral wall.

10. A pressure cooker as claimed in claim 9 wherein each extension at its circumferential ends is chamfered so that the extension narrows in the direction of its free end.

11. A pressure cooker as claimed in any one of claims 8 to 10 wherein an extension is provided on all of said parts of the peripheral wall between the segments.

12. A lid for a pressure cooker having a base with a peripheral side wall and a peripheral out turned flange with a series of outwardly projecting segments spaced around its periphery, which lid has a generally downwardly extending peripheral wall having a series of inwardly extending segments, at least some of the parts of the peripheral wall between the segments being formed with downward extensions.

13. A lid as claimed in claim 12 wherein each extension does not extend the full length of its part of the peripheral wall and also each extension at its circumferential ends is chamfered so that the extension narrows in the direction of its free end.

14. A lid as claimed in claim 13 wherein an extension is provided on all of said parts of the peripheral wall between the segments.

15. A lid as claimed in any one of claims 12 to 14 wherein the lid is formed from a blank of metal which is substantially circular except for said extensions projecting outwards, said blank being pressed to form the peripheral wall and the inwardly extending segments being pressed inwards.

16. A pressure cooker comprising a base having a peripheral outturned flange with a series of outwardly projecting segments spaced around its periphery and a lid as claimed in any one of claims 12 to 15.
